# EUROPEAN PATENT APPLICATION

(11) **EP 4 502 933 A1**
(43) Date of publication of application: **05.02.2025**
(21) Application number: 23845067.0
(22) Date of filing: 01.06.2023
(51) Int. Cl.: G06T 7/00

(54) **CIRCUIT LAYOUT PROCESSING METHOD AND APPARATUS, DEVICE, STORAGE MEDIUM AND PROGRAM PRODUCT**

(30) Priority: 25.07.2022 CN 202210880220
(71) Applicant: Tencent Technology (Shenzhen) Company Limited, Shenzhen, Guangdong 518057 (CN)
(72) Inventor: MA, Shengming, Shenzhen, Guangdong 518057 (CN); WANG, Jianming, Shenzhen, Guangdong 518057 (CN); HUAI, Sainan, Shenzhen, Guangdong 518057 (CN); ZHANG, Shengyu, Shenzhen, Guangdong 518057 (CN); AN, Shuoming, Shenzhen, Guangdong 518057 (CN); XU, Xiong, Shenzhen, Guangdong 518057 (CN); LI, Dengfeng, Shenzhen, Guangdong 518057 (CN)
(74) Representative: Reddie & Grose LLP
(86) International application number: PCT/CN2023/097697
(87) International publication number: WO 2024/021854

(57) **Abstract**

A circuit layout processing method and apparatus, a device, a storage medium and a program product, which relate to the technical field of micro-nano processing. The circuit layout processing method comprises: acquiring an initial circuit layout of a chip (21), the initial circuit layout comprising initial position information of a line in the chip; acquiring a frame correction value of the line (22), the frame correction value being a correction value which is set on the basis of an etching error during a processing process of the chip; and correcting the boundary of the line in the initial circuit layout on the basis of the initial position information and the frame correction value to obtain a corrected circuit layout (23). According to the present solution, the influence caused by the etching error may be reduced during an etching process in chip manufacturing while ensuring the design efficiency of the circuit layout of the chip.

## Description

### RELATED APPLICATION

This application claims priority to Chinese Patent Application No. 202210880220.2, filed on July 25, 2022 and entitled "CIRCUIT LAYOUT PROCESSING METHOD AND APPARATUS, DEVICE, STORAGE MEDIUM, AND PROGRAM PRODUCT".

### FIELD OF THE TECHNOLOGY

Embodiments of this application relate to the field of micro-nano processing technologies, and in particular, to a circuit layout processing method and apparatus, a device, a storage medium, and a program product.

### BACKGROUND OF THE DISCLOSURE

In the micro-nano processing technology, etching refers to a patterning technology that selectively etches and peels off a surface of a semiconductor substrate according to a design of circuit layout.

In related art, due to process and other reasons, a micro-nano processing device causes etching errors during etching according to the circuit layout. Correspondingly, an etched finished product has an expanding or narrowing size compared to the circuit layout. This phenomenon causes characteristic parameters and performance of a finished device to deviate greatly from expectations.

### SUMMARY

Embodiments of this application provide a circuit layout processing method and apparatus, a device, a storage medium, and a program product, which can ensure design efficiency of circuit layout while reducing impact of expanding or narrowing of a finished product size caused by an etching error. The technical solutions are as follows:

According to an aspect of embodiments of this application, a circuit layout processing method is provided, performed by a computer device. The method includes:
obtaining initial circuit layout of a chip, the initial circuit layout including initial position information of a wire in the chip;
obtaining a frame correction value for the wire, the frame correction value being determined based on an etching error during a process of processing the chip; and
correcting a boundary of the wire in the initial circuit layout based on the initial position information and the frame correction value to obtain corrected circuit layout.

According to another aspect of embodiments of this application, a circuit layout processing apparatus is provided. The apparatus includes:
an initial layout obtaining module, configured to obtain initial circuit layout of a chip, the initial circuit layout including initial position information of a wire in the chip;
a correction value obtaining module, configured to obtain a frame correction value for the wire, the frame correction value being determined based on an etching error during a process of processing the chip; and
a correction module, configured to correct a boundary of the wire in the initial circuit layout based on the initial position information and the frame correction value to obtain corrected circuit layout.

In a possible implementation, the correction module is configured to:
generate a correction frame of the boundary of the wire in the initial circuit layout based on the initial position information and the frame correction value; and
correct the boundary of the wire in the initial circuit layout based on the correction frame to obtain the corrected circuit layout.

In a possible implementation, the correction module is configured to perform a Boolean operation on the initial position information and position information of the correction frame to obtain the corrected circuit layout.

In a possible implementation, the correction module is configured to perform a merge operation on the initial position information and the position information of the correction frame in response to that the frame correction value is a positive value.

In a possible implementation, the correction module is configured to perform a subtract operation on the initial position information and the position information of the correction frame in response to that the frame correction value is a negative value.

In a possible implementation, the correction value obtaining module is configured to:
obtain genus detection information of the wire, the genus detection information indicating whether a genus exists in the wire; and
generate the correction frame based on the initial position information and the frame correction value according to the genus detection information.

In a possible implementation, the correction value obtaining module is configured to add, in response to the genus detection information indicating that no genus exists in the wire, the frame correction value based on the initial position information of the boundary of the wire to obtain the correction frame.

In a possible implementation, the correction value obtaining module is configured to:
segment, in response to the genus detection information indicating that the wire has a genus, the boundary of the wire to obtain at least one outer boundary frame and at least one inner boundary frame, where the outer boundary frame is a frame enclosed by an outer boundary of the wire, the inner boundary frame is a frame enclosed by a boundary of the genus in the wire;
add, based on position information of the at least one outer boundary frame, the frame correction value to the at least one outer boundary frame to obtain at least one outer boundary correction frame;
subtract, based on position information of the at least one inner boundary frame, the frame correction value from the at least one inner boundary frame to obtain at least one inner boundary correction frame; and
obtain the at least one outer boundary correction frame and the at least one inner boundary correction frame as the correction frame.

In a possible implementation, the correction value obtaining module is configured to:
obtain first genus detection information in response to position information of repeated points existing in the initial position information of the wire, the first genus detection information indicating that a genus exists in the wire; and
obtain second genus detection information in response to no position information of repeated points existing in the initial position information of the wire, the second genus detection information indicating that no genus exists in the wire.

In a possible implementation, the chip is a superconducting quantum chip.

In a possible implementation, the wire includes at least one of a coplanar waveguide wire, a component, and silkscreen.

According to still another aspect, a computer device is provided. The computer device includes a processor and a memory, the memory having at least one computer instruction stored therein, and the at least one computer instruction being loaded and executed by the processor to implement the foregoing circuit layout processing method.

According to yet another aspect, a computer-readable storage medium is provided, the storage medium having at least one computer instruction stored thereon, and the at least one computer instruction being loaded and executed by a processor to implement the foregoing circuit layout processing method.

According to yet another aspect, a computer program product or a computer program is provided, including computer instructions, and a computer-readable storage medium having the computer instructions stored thereon. A processor of a computer device reads the computer instructions from the computer-readable storage medium, and the processor executes the computer instructions, so that the computer device performs the foregoing circuit layout processing method.

The technical solutions provided in the embodiments of this application may include at least the following beneficial effects:

For initial circuit layout of a designed chip, a wire in the initial circuit layout can be corrected based on the frame correction value set by the etching error, so that the circuit layout can be automatically adjusted according to an error of an etching process during a chip design stage, thereby reducing an impact of the etching error during the etching process of chip manufacturing, while ensuring design efficiency of the circuit layout of the chip.

### BRIEF DESCRIPTION OF THE DRAWINGS

FIG. 1 is a schematic diagram of an application scenario of a superconducting quantum chip according to an embodiment of this application.
FIG. 2 is a flowchart of a circuit layout processing method according to an embodiment of this application.
FIG. 3 is a schematic diagram of before and after correction of circuit layout according to the embodiment of FIG. 2.
FIG. 4 is a flowchart of a circuit layout processing method according to an embodiment of this application.
FIG. 5 shows a wire pattern according to the embodiment of FIG. 4.
FIG. 6 is a schematic diagram of frame generation of a wire without a genus according to the embodiment of FIG. 4.
FIG. 7 is a schematic diagram of a frame of a wire with a genus according to the embodiment of FIG. 4.
FIG. 8 is a diagram of a processing effect of a dual-concentric square-shaped wire pattern according to the embodiment of FIG. 4.
FIG. 9 is a diagram of a processing effect of a pattern without a genus according to the embodiment of FIG. 4.
FIG. 10 is a diagram of a processing effect of a pattern with a genus according to the embodiment of FIG. 4.
FIG. 11 is a flowchart of a solution according to the embodiment of FIG. 4.
FIG. 12 is a diagram of an engineering implementation effect of widening a CPW resonance cavity on circuit layout.
FIG. 13 is a diagram of an engineering implementation effect of widening a pad on circuit layout.
FIG. 14 is a diagram of an engineering implementation effect of widening silkscreen on circuit layout.
FIG. 15 is a block diagram of a structure of a circuit layout processing apparatus according to an embodiment of this application.
FIG. 16 is a schematic diagram of a structure of a computer device according to an embodiment of this application.

### DESCRIPTION OF EMBODIMENTS

To make the objectives, technical solutions, and advantages of this application clearer, the following further describes implementations of this application in detail with reference to the accompanying drawings.

Before embodiments of this application are introduced and described, some terms related to the embodiments of this application are first described.
(1) Photolithography: It is also referred to as optical lithography or ultraviolet photolithography and is a precision processing process for patterning parts and an important step in semiconductor manufacturing. A photolithography technology uses exposure and development to carve a geometric pattern structure on a photoresist layer, transfers a geometric pattern from a photomask to a photosensitive chemical photoresist on a substrate, and then an exposed pattern is transferred to the substrate (wafer) by performing a series of chemical treatments (etching process).
(2) Wafer: It is an abbreviation of a semiconductor crystal circular wafer, and is used to make a semiconductor circuit. The most common wafer is a silicon wafer. An original material of the silicon wafer is silicon (mostly monocrystalline silicon), because a shape of the monocrystalline silicon is a thin slice of a cylindrical semiconductor crystal, the monocrystalline silicon is called a wafer. The wafer serves as a carrier substrate in a process of manufacturing an integrated circuit and is also used in the manufacture of solar cells.
(3) Diffraction: It refers to a physical phenomenon in which a wave deviates from original straight-line propagation when encountering an obstacle. In classical physics, a wave bends and propagates to varying degrees after passing through an obstacle such as a slit, a hole, or a disk. This is diffraction. The diffraction is an inherent property of the wave.
(4) Layout: It is also referred to as circuit layout, is a design drawing that describes how components in a circuit are laid out, placed, and connected, and is a planar geometric shape description of physical situations of a real circuit. A design of the layout needs to comply with constraints such as a manufacturing process, timing, an area, and power consumption. A layout design file includes a shape, an area, and position information of each hardware unit on a chip.
(5) Photomask: It is also referred to as photo mask (mold) and photomask and is a quartz glass sheet with a chromium metal film that is covered with images of integrated circuits. The photomask copies a pattern formed on a semiconductor onto a wafer during a photolithography process of manufacturing the integrated circuits. A principle is very similar to developing a camera film, using the negative to copy an image onto a photo.
(6) Superconducting quantum chip: It is a central processing unit of a superconducting quantum computer. A quantum computer is a machine that uses principles of quantum mechanics to perform calculations. Based on a superposition principle and quantum entanglement of the quantum mechanics, the quantum computer has a strong parallel processing capability and can resolve some problems that are difficult for classical computers to calculate. A zero-resistance characteristic of a superconducting quantum bit and a manufacturing process close to that of an integrated circuit make a superconducting quantum computing system constructed by using the superconducting quantum bit be one of the most promising systems for achieving practical quantum computing.

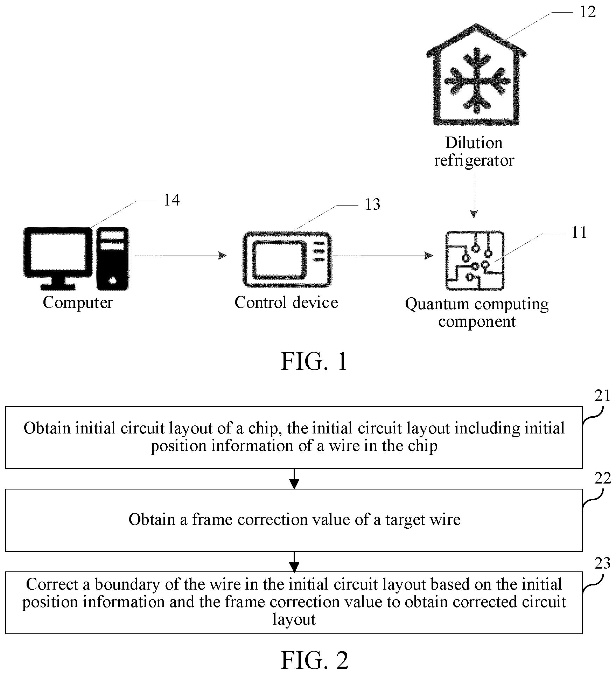

FIG. 1 is a schematic diagram of an application scenario of a superconducting quantum chip according to an embodiment of this application. As shown in FIG. 1, the application scenario may be a superconducting quantum computing platform. The application scenario includes: a quantum computing component 11, a dilution refrigerator 12, a control device 13, and a computer 14.

The quantum computing component 11 is a circuit that operates on a physical quantum bit. The quantum computing component 11 can be achieved as a quantum chip, such as a superconducting quantum chip near absolute zero. The dilution refrigerator 12 is configured to provide an absolute zero environment for the superconducting quantum chip.

The control device 13 is configured to control the quantum computing component 11. The computer 14 is configured to control the control device 13. For example, a written quantum program is compiled into instructions by software in the computer 14 and send the instructions to the control device 13 (such as an electronic/microwave control system). The control device 13 converts the above instructions into electronic/microwave control signals and inputs the signals to the dilution refrigerator 12 to control superconducting quantum bit at a temperature less than 10 mK. A reading process is the opposite. A read waveform is sent to the quantum computing component 11.
(7) Coplanar waveguide (CPW): It is a microwave planar transmission line with superior performance and easy processing and used for transmitting a microwave signal. A large amount of coplanar waveguide technology is used in a superconducting quantum chip.
(8) Etching/Wet etching: It is photolithography etching and an important part of a semiconductor process. The etching is a process of selectively removing an unwanted material from a surface of a silicon wafer by using a chemical or physical method. A basic objective of the etching is to correctly copy a mask pattern on a glued silicon wafer. The wet etching is an etching method that immerses an etching material in a corrosive liquid for corrosion and has advantages of good selectivity and repeatability, high production efficiency, simple device, and low costs.
(9) Micro-nano processing: A micro-nano manufacturing technology refers to components with scales in sub-millimeter, micron, and nanometer as well as a design, processing, assembly, integration, and an application technology of parts or systems formed by these components.
(10) Component: It is a general term for a component and a device and is an electronic part and a constituent element in a circuit, such as resistors, capacitors, and inductors.
(11) Silkscreen: It is called screen printing in full name. The silkscreen is a printed line/printed word (usually white) used to mark information such as symbols, logos, component types, and parameters on a printed circuit board (PCB). The silkscreen is not involved in functions of the PCB itself. However, information provided by the silkscreen helps manufacturers and engineers identify the PCB and different components on the PCB.
(12) Genus: It is a hole on a closed surface. For an orientable surface, a genus quantity (that is, a quantity of holes on the closed surface) is an integer, indicating the maximum quantity of curves that are cut along a closed simple curve without cutting off the surface. For example, a genus of a sphere is 0, and a genus of a ring is 1.
(13) Boolean operation: It is a logical operation (deduction) in a computer language, including operations of union, intersection, and difference. There are operators such as AND, OR, and NOT. A result is called a Boolean value, 1 means "true", and 0 means "false".
(14) Pad: The pad exists on a circuit board and is a location used for connecting electronic components to wires (or wirings, or lines). Solder is usually used on the pad to weld and fix pins of components to the circuit board. In classic circuits, the pads are usually polygonal pieces of copper. However, in superconducting quantum chips, a shape and a structure of the pad are different.

In a process of performing photolithography in a classic semiconductor manufacturing industry, in a case that a line width on a wafer is smaller than an exposure wavelength, image errors caused by diffraction occur, resulting in occurrence of errors. Optical proximity correction is a photolithography enhancement technology used in semiconductor production to ensure integrity of pattern edges in circuit layout. The optical proximity correction can correct and compensate for image errors by moving the pattern edges on photomask layout or changing photomask layout.

Similarly, in a manufacturing process of superconducting quantum chips, a CPW-based superconducting circuit needs to be etched. Due to process and other reasons, a (positive and negative) etching error occurs, causing device feature parameters and performance to deviate greatly from expectations. To address this problem, in a possible implementation of the embodiment of this application, error is taken into consideration in a design process of the circuit layout, and the error is compensated and offset in advance, so that the error is corrected during manufacturing. This step can be achieved by a designer manually adjusting a boundary of the wire (or line).

However, in a case that a chip scale is large, the process of manually adjusting the boundary of the wire is cumbersome, seriously affecting a chip design and manufacturing efficiency. For this, embodiments of this application provide a circuit layout processing method, which can ensure design efficiency of circuit layout of the chip while reducing impact of expanding or narrowing of a finished product size caused by an etching error.

FIG. 2 is a flowchart of a circuit layout processing method according to an embodiment of this application. An execution entity of each step of the method may be a computer device. The method may include the following steps:
Step 21: Obtain initial circuit layout of a chip, the initial circuit layout including initial position information of a wire in the chip.

The initial circuit layout may be circuit layout designed and completed by a chip designer according to performance requirements of the chip.

Optionally, the initial position information of the wire in the initial circuit layout may include coordinate information of a boundary of the wire in the initial circuit layout.

Step 22: Obtain a frame correction value for the wire, the frame correction value being a correction value that is set/determined based on an etching error during a process of processing the chip.

The frame correction value (offset or a boundary correction value) may be an offset value used to expand the boundary of the wire outward or contract inward. In other words, the frame correction value is used for correcting the boundary of the wire. In embodiments, the frame correction value is used for correcting the boundary of the wire by adjusting the coordinates of the boundary in the initial circuit layout based on the frame correction value.

Because the wire in the chip has a width, in the initial circuit layout, the wire may be indicated by a position (a coordinate) of the boundary. The boundary of the wire refers to a boundary between a region covered by the wire and a region outside the wire.

For example, when the boundary of the wire needs to be expanded outward, offset may be a positive value, and when the boundary of the wire needs to be contracted inward, offset may be a negative value.

The frame correction value may be determined by using experimental data on etching errors under a current etching process condition. Because a manufacturing environment, an instrument difference, a process parameter, and the like affect a magnitude of the etching error, based on considerations of versatility, a compensation parameter (that is, the frame correction value) in the embodiment of this application is selected to correspond to an experimental value given in a current processing condition.

The frame correction value may be set by receiving a setting operation that is performed by a user in the setting interface.

In other words, the frame correction value may be set by the user using the setting interface provided by design software. For example, the solutions shown in the embodiments of this application may be executed by a computer device using the design software. The design software may provide a setting interface. The user may set the frame correction value in the design software according to the frame correction value through the setting interface.

For example, the setting interface may include an input frame for the frame correction value. The user enters the frame correction value into the input box based on the etching error. After clicking "OK", the design software can complete the setting of the frame correction value.

For another example, the setting interface may include a setting option/input box for the etching error. The user may select the etching error through the setting option, or input the etching error through the input box. After clicking "OK", the design software can determine a corresponding frame correction value based on the etching error, and then complete the setting of the frame correction value. The design software may be pre-set with a first correspondence or a calculation formula between the etching error and the frame correction value. After the design software obtains the etching error set by the user through the setting option/input box, a corresponding frame correction value can be determined in combination with the correspondence or calculation formula. The correspondence or calculation formula may be set into the design software by a developer of the design software during a development process. In some embodiments, the frame correction value may be determined based on parameters of etching processes for the chip, or based on etching process numbers of the etching processes for the chip and frame correction values. In these embodiments, the frame correction value may be determined with a parameter of an etching process for the chip or an etching process number of the etching process. A second correspondence between etching errors and parameters of the etching processes for the chip, or between the etching errors and etching process numbers of the etching processes may be pre-defined. In this way, once a parameter or an etching process number of the etching process is given, a corresponding etching error can be determined according to the second correspondence, and further, the frame correction value corresponding to the determined etching error can thereby be determined according to the first correspondence, thereby achieving determining the frame correction value from the parameter or etching process number of the etching process for the chip based on the etching error.

Step 23: Correct a boundary of the wire in the initial circuit layout based on the initial position information and the frame correction value to obtain corrected circuit layout.

In embodiments of this application, the computer device may correct a boundary of the wire in the initial circuit layout based on the initial position information of the wire in the chip and the frame correction value to obtain corrected circuit layout.

The corrected circuit layout is configured to prepare the wire in the chip by using an etching process.

In the embodiment of this application, after the computer device obtains the initial position information of the wire in the chip and the frame correction value, the boundary of the wire in the initial circuit layout may be expanded outward or shrunk inward (depending on positive and negative attributes of the frame correction value) to obtain the corrected circuit layout.

In other words, the computer device may expand a boundary of a wire indicated by the initial position information to the outside of the region covered by the wire, or shrink the boundary to the inside of the region covered by the wire, to correct the boundary of the wire in the initial circuit layout based on the initial position information based on the wire in the chip and the frame correction value. A distance of expansion or shrinkage is related to a numerical value of the frame correction value.

For example, assuming that the frame correction value is +3, the computer device may extend the boundary of the wire indicated by the initial position information by 3 coordinate units (such as 3 pixel coordinates) outside the region covered by the wire. Assuming that the frame correction value is -3, the computer device may shrink the boundary of the wire indicated by the initial position information by 3 coordinate units into the region covered by the wire.

For another example, assuming that the frame correction value is +3, the computer device may shrink the boundary of the wire indicated by the initial position information by 3 coordinate units into the region covered by the wire. Assuming that the frame correction value is -3, the computer device may extend the boundary of the wire indicated by the initial position information by 3 coordinate units outside the region covered by the wire.

Embodiments of this application provide a solution for compensating wire size errors caused by etching during the manufacturing process of a chip (such as a superconducting quantum chip). In this solution, an impact of the etching error on device parameters and performance is greatly reduced. In addition, chip design efficiency is improved.

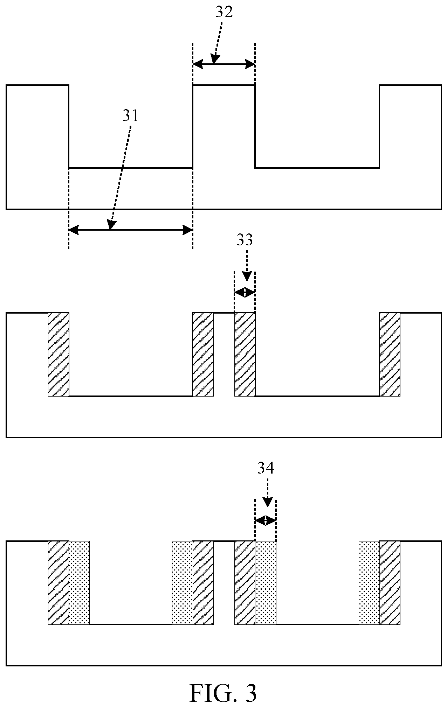

For example, FIG. 3 is a schematic diagram of before and after correction of circuit layout according to the embodiment of this application. Regarding a CPW line width expanding problem caused by wet etching shown in FIG. 3, negative compensation can be used in the solution shown in the embodiment of this application. As shown in FIG. 3, in a CPW cross-section of a process finished product, an expected etching width is 31 and a line width is 32. If the etching is performed according to the initial circuit layout, an etching width becomes narrower due to existence of the etching error. In FIG. 3, a width of each side of the wire expands outwards by 33. The initial circuit layout is corrected by using the solution shown in the embodiment of this application, and the correction width on each side is a width of 34 (that is, it is expanded outward on both sides of the wire). Then, based on the corrected circuit layout, the inward narrowing of the wires caused by the etching error can be compensated by etching CPW lines through the etching process.

In conclusion, by using the solutions in the embodiment of this application, for initial circuit layout of a designed chip, a wire of initial circuit layout can be corrected based on the frame correction value set by the etching error, so that the circuit layout can be automatically adjusted according to an error of an etching process during a chip design stage, thereby reducing an impact of an etching process error during the etching process of chip manufacturing, while ensuring design efficiency of the circuit layout of the chip.

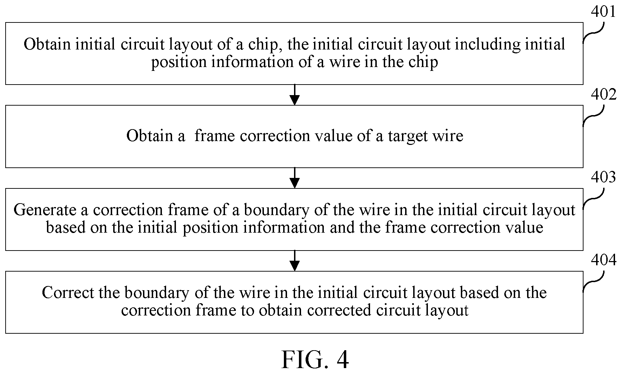

FIG. 4 is a flowchart of a circuit layout processing method according to an embodiment of this application. An execution entity of each step of the method may be a computer device. The computer device may be a conventional computer, such as a desktop computer, a laptop computer, a tablet computer, a personal workstation, or a server. As shown in FIG. 4, the method may include the following steps:

Step 401: Obtain initial circuit layout of a chip, the initial circuit layout including initial position information of a wire in the chip.

In a possible implementation, the chip is a superconducting quantum chip.

Optionally, the chip may alternatively be other types of chips, such as an optical quantum chip and an ion quantum well chips.

Optionally, the chip may alternatively be a conventional semiconductor chip.

In a possible implementation, the wire may include at least one of a coplanar waveguide line, a component, and silkscreen.

Step 402: Obtain a frame correction value for the wire, the frame correction value being a correction value that is set based on an etching error during a process of processing the chip.

In a possible implementation of the embodiment of this application, the frame correction value may be input by a designer.

For example, the computer device may display a parameter setting interface. The parameter setting interface may include a frame correction value input box. The designer may enter the frame correction value in the frame correction value input box.

For another example, the parameter setting interface may include a frame correction value setting column. The frame correction value setting column includes options corresponding to one or more preset frame correction values. The designer may select an option corresponding to a needed frame correction value in the frame correction value setting column.

In another possible implementation of the embodiment of this application, the frame correction value may alternatively be automatically obtained by the computer device. For example, the initial circuit layout corresponds to relevant parameters of a used etching process, for example, the number of the used etching process. When obtaining the initial circuit layout, the computer device may read relevant parameters of the etching process used in the initial circuit layout, and automatically match a corresponding box correction value based on the read relevant parameters.

For example, the computer device may store etching process numbers and frame correction values corresponding to the etching process numbers. After reading the etching process numbers corresponding to the initial circuit layout, the computer device may query corresponding frame correction values based on read etching process numbers.

After obtaining the initial circuit layout and the frame correction value, the computer device may correct a boundary of the wire in the initial circuit layout based on the initial position information of the wire in the chip and the frame correction value to obtain corrected circuit layout. The corrected circuit layout is configured to prepare the wire chip by using an etching process. For the process, refer to subsequent steps 403 and 404.

Step 403: Generate a correction frame of the boundary of the wire in the initial circuit layout based on the initial position information and the frame correction value.

The computer device may generate a correction frame of the boundary of the wire in the initial circuit layout based on the initial position information of the wire in the initial circuit layout and the frame correction value.

In a possible implementation, the generating a correction frame of the boundary of the wire in the initial circuit layout based on the initial position information of the wire in the initial circuit layout and the frame correction value may include:

S403a: Obtain genus detection information of the wire, the genus detection information being used for indicating whether a genus exists in the wire.

Whether a genus exists in the wire may also be referred to whether a genus exists in a region covered by the wire.

The region covered by the wire may refer to the wire itself and a region occupied by a chalk pattern surrounded by the wire in the circuit layout. Alternatively, the region covered by the wire may be a smallest circumscribed rectangle including the wire or a region where a smallest circumscribed circle is located.

In actual operation, there are various closed patterns on the circuit layout. The circuit layout is usually in a GDSII format (a database file format used for data conversion of integrated the circuit layout). GDSII is a binary file that contains geometrical shape of planes in the circuit layout, text or labels, and other relevant information, and may be formed by a hierarchical structure. GDSII data may be used for reconstructing all or part of layout information.

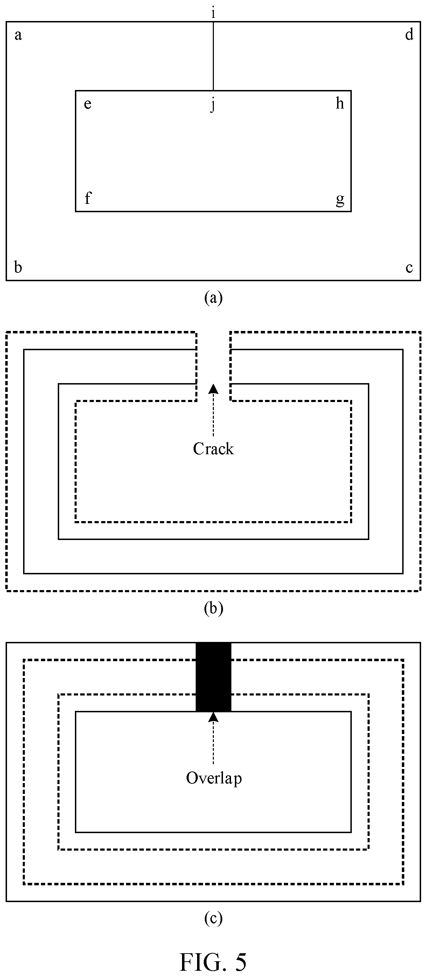

FIG. 5 shows a wire pattern according to the embodiment of this application. Because a storage structure of the GDSII file format needs a pattern boundary to be "drawn in one stroke", direct drawing of a pattern having a genus does not satisfy layout file requirements, such as a pattern with a "dual-concentric square" shape. To resolve this problem, an additional connecting edge is needed between the inner and outer boundaries of the pattern. When drawing, the pattern may be drawn continuously by passing through this edge, as shown in section (a) in FIG. 5. Because the computer device cannot directly distinguish this additional edge from the boundary of an original pattern, if similar polygon boundaries in a GDSII file are directly shrunk, this edge is also be shrunk, causing a crack in the pattern and the pattern no longer being "closed", as shown in section (b) in FIG. 5. On the contrary, when widening, a phenomenon of overlapping patterns occurs, as shown in section (c) in FIG. 5. This change in a pattern structure apparently destroys an original device structure, resulting in errors in a manufacturing process.

In this regard, in this embodiment of this application, the computer device may first detect whether the wire includes a genus. For the wires including a genus and the wire not including a genus, this embodiment of this application uses different methods to correct.

In a possible implementation, when obtaining the genus detection information of the wire, the computer device may perform the following steps:
(1) Obtain first genus detection information in response to position information of repeated points existing in initial position information of the wire, the first genus detection information being used for indicating that a genus exists in a region covered by the wire.
(2) obtain second genus detection information in response to no position information of repeated points existing in initial position information of the wire, the second genus detection information being used for indicating that no genus exists in the region covered by the wire.

In the embodiment of this application, because the storage structure of the GDSII file format needs the pattern boundary to be "drawn in one stroke", the position information of the wire in the circuit layout may be stored in a format of a point set of the boundary. The point set includes coordinates of key points on the boundary of the wire.

For example, the position information of a rectangular wire may include 4 pairs of coordinate points, corresponding to coordinate points of four corner points of a rectangle.

However, position information of a dual-concentric square-shaped wire including a single genus may include 10 pairs of coordinate points, corresponding to coordinates of four corner points of a dual-concentric square-shaped outer frame (such as point a, point b, point c, and point d in section (a) in FIG. 5), coordinates of the four corners of a dual-concentric square-shaped inner frame (such as point e, point f, point g, and point h in section (a) in FIG. 5), and coordinates of two endpoints of a line connecting the inner and outer frames (such as point i and point j in section (a) in FIG. 5).

For the wire without a genus (such as a rectangular wire), during the drawing process, a drawn wire passes through the four corner points of the rectangle successively, and each corner point is passed only once. However, for the wire with a genus (such as the wire shown in section (a) in FIG. 5), during the drawing process, a drawn wire passes through the two endpoints on a connection line between the inner and outer frames twice. In other words, in the GDSII file, the two endpoints on the connection line between the inner and outer frames appear twice in the point set of the dual-concentric square-shaped wire. For more complex wires with a genus, there may be points that appear three or more times in the corresponding point set.

Based on the above principle, when determining whether a wire has a genus, the computer device may determine whether there are points that appear twice or more in the position information (the point set) of the wire. If yes, it is determined that the wire has a genus (that is, the second genus detection information is obtained); otherwise, it is determined that no genus exists in the wire (that is, the first genus detection information is obtained).

S403b: Generate the correction frame based on the initial position information of the wire in the initial circuit layout and the frame correction value according to the genus detection information.

In the embodiment of this application, for the two situations of presence/absence of genus, the computer device may use different processing methods to generate the correction frame.

In a possible implementation, the generating the correction frame based on the initial position information of the wire in the initial circuit layout and the frame correction value according to the genus detection information may include:
adding, in response to the genus detection information indicating that no genus exists in the wire, the frame correction value based on the initial position information of the boundary of the wire to obtain the correction frame.

In the embodiment of this application, when it is detected that no genus exists in the wire, the computer device may directly start from the boundary of the wire and extend a distance outward or inward (that is, the frame correction value) to obtain the correction frame.

For example, when it is detected that no genus exists in the wire, for a point on the boundary, a normal direction (perpendicular to a tangent direction) of the point on the boundary is determined, and then the point moving toward the outside or inside of the wire to the frame correction value along the normal direction is calculated based on a coordinate of the point in the initial position information, to obtain a coordinate of a corresponding point in the correction frame. The above processing is performed for each point on the boundary of the wire. To be specific, coordinates of each point in the correction frame may be obtained.

The computer device may start from a point on the boundary of the wire and calculate the point along the tangent direction of the point on the boundary.

The correction frame may be a frame of which a width is the frame correction value. I other words, a line width of the frame is the frame correction value.

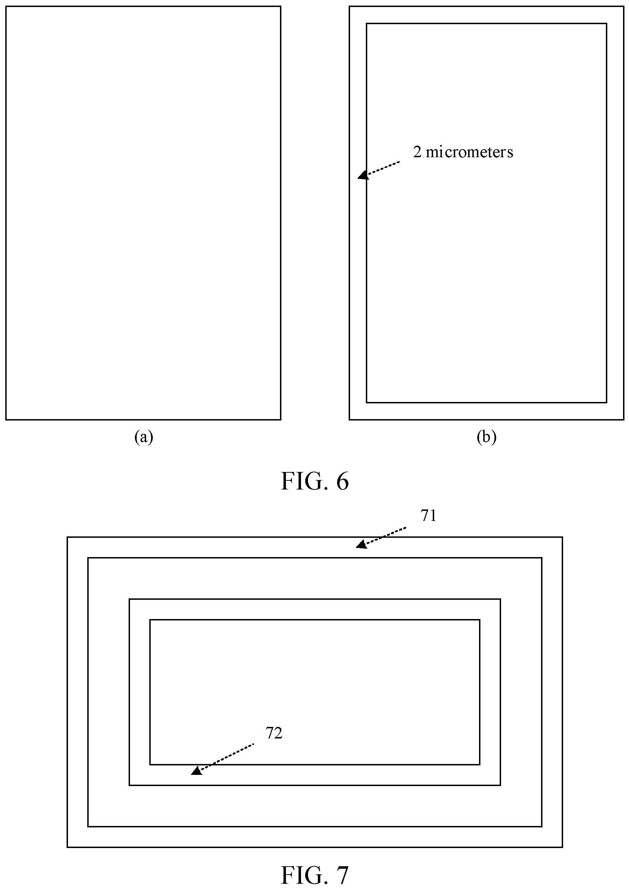

FIG. 6 is a schematic diagram of frame generation of a wire without a genus according to this embodiment of this application. A pattern of an input wire is shown in section (a) in FIG. 6. The pattern of the wire is a rectangle without a genus. The computer device may first determine the boundaries of the pattern (for example, coordinates of four corner points of the pattern are determined). The pattern is expanded or shrunk along the boundary according to the size and sign of a compensation numerical value (that is, the frame correction value), to generate a closed frame (to be specific, the line of the frame has a specific width, and the width is the frame correction value), for compensating and correcting the pattern. For example, to resolve a problem of size expanding caused by wet etching, the embodiment of this application need to shrink the layout. For the input pattern shown in section (a) in FIG. 6, it is necessary to generate a shrinkage pattern inward along the boundary of the pattern. As shown in section (b) in FIG. 6, the thickness of the frame is a target compensation value (that is, the frame correction value). For example, if a processor feeds back that the etching expanding (a positive error) under a current process condition is 2 microns, then a thickness of the frame shown in section (b) in FIG. 6 is also 2 micrometers. On the contrary, if the wire needs to be widened, a frame needs to be generated outward along a pattern boundary.

In a possible implementation, the generating the correction frame based on the initial position information of the wire in the initial circuit layout and the frame correction value according to the genus detection information may include:
segmenting, in response to the genus detection information indicating that a region covered by the wire has a genus, the boundary of the wire to obtain at least one outer boundary frame and at least one inner boundary frame, where the outer boundary frame is a frame enclosed by an outer boundary of the wire, and the inner boundary frame is a frame enclosed by a boundary of the genus in the wire;
adding, given initial position information of the at least one outer boundary frame, the frame correction value to the at least one outer boundary frame to obtain at least one outer boundary correction frame; that is, adding, based on initial position information of the at least one outer boundary frame, the frame correction value to the at least one outer boundary frame to obtain at least one outer boundary correction frame, where because the frame correction value is positive and negative, when the frame correction value is positive, an effect of adding the frame correction value to at least one outer boundary frame is to start from at least one outer boundary frame and expand to the outside of the dual-concentric square-shaped wire; on the contrary, when the frame correction value is negative, an effect of adding the frame correction value to the at least one outer boundary frame is to start from at least one outer boundary frame and expand to the inside of the dual-concentric square-shaped wire; for example, for a point on the outer boundary frame, a normal direction of the point on the outer boundary frame is determined, and then the point moving toward the outside or inside of the wire to the frame correction value along the normal direction is calculated based on a coordinate of the point in the initial position information, to obtain a coordinate of a corresponding point in the outer boundary correction frame; the above processing is performed for each point on the outer boundary frame, to be specific, the coordinates of each point in the outer boundary correction frame may be obtained;
subtracting, given initial position information of the at least one inner boundary frame, the frame correction value from the at least one inner boundary frame to obtain at least one inner boundary correction frame; that is, subtracting, based on initial position information of the at least one inner boundary frame, the frame correction value from the at least one inner boundary frame to obtain at least one inner boundary correction frame; where because the frame correction value is positive and negative, when the frame correction value is positive, an effect of subtracting the frame correction value from at least one inner boundary frame is to start from at least one inner boundary frame and expand to the inside of the dual-concentric square-shaped wire; on the contrary, when the frame correction value is negative, an effect of subtracting the frame correction value from at least one inner boundary frame is to start from at least one inner boundary frame and expand to the outside of the dual-concentric square-shaped wire; for example, for a point on the inner boundary frame, a normal direction of the point on the inner boundary frame is determined, and then the point moving toward the outside or inside of the wire to the frame correction value along the normal direction is calculated based on a coordinate of the point in the initial position information, to obtain a coordinate of a corresponding point in the inner boundary correction frame; the above processing is performed for each point on the inner boundary frame; to be specific, coordinates of each point in the inner boundary correction frame may be obtained; and
obtaining the at least one outer boundary correction frame and the at least one inner boundary correction frame as the correction frame.

FIG. 7 is a schematic diagram of a frame of a wire with a genus according to this embodiment of this application. Using a pattern of a dual-concentric square-shaped wire with a single genus as an example, the generated correction frame includes an outer boundary correction frame 71 and an inner boundary correction frame 72. The outer boundary correction frame 71 is a pattern obtained by extending inward/outward based on an outside boundary of the dual-concentric square-shaped wire (that is, adding a frame correction value to at least one outer boundary frame). The inner boundary correction frame 72 is a pattern obtained by extending in an opposite direction based on the outer boundary frame of the dual-concentric square-shaped wire (that is, subtracting the frame correction value from at least one inner boundary frame). The effect of generating a compensation frame (that is, the outer boundary correction frame 71 and the inner boundary correction frame 72) is shown in FIG. 7. In this way, the compensation correction processing is performed after the frames are generated on both the inner and outer boundaries of the pattern at the same time, so that problems such as pattern fracture and overlap are prevented.

By executing circuit layout processing code, the computer device first processes reading of the layout and parameters, and then enters a core part of the code. The part needs to determine whether the pattern has a "genus" and corresponding process is performed. In a core function, after it is determined that the pattern with a wire does not have a "genus", a split variable is first used to store whether a "genus" exists (that is, the split variable is used to mark whether the pattern has a genus). If not, an entire etching boundary (that is, the correction frame) is drawn according to the following code:

```
    If(!split) //If the mark is split;
    {
    //no attach point detected, just continue; //no attach point detected, just continue;
    appendFp (cell, target_point_array, offset); //call AppendFp function;
    return; //return
    }
```

In the above code, input parameters of the appendFp function include cell, target_point_array, and offset, where cell is an output file name, target_point_array is position information of a pattern (an array in a point set format), and offset is a frame correction value.

An example in which the wire containing a single genus is used. If a genus exists, subsequent code segment an entire boundary of a pattern of the wire into two segments to form two frames (that is, the outer boundary frame and the inner boundary frame), and then the two rings are drawn separately according to the following code:
appendFp (cell, ring1, offset); //call AppendFp function;
appendFp (cell, ring2, -offset); //call AppendFp function;

In the above code, ring1 is position information of the outer boundary frame (an array in a point set format), and ring2 is position information of the inner boundary frame.

For the pattern with a genus in the above solution of the embodiment of this application, only an example in which a dual-concentric square-shaped pattern with a single genus is used for description. A processing method of patterns with a genus in other shapes is similar to that of the processing method of the dual-concentric square-shaped pattern with a genus. Details are not described herein again.

For the above solutions of the embodiments of this application, only rectangles are used as an example for description of the pattern without a genus. A processing method for the pattern without a genus in other shapes is similar to that of the rectangular pattern. Details are not described herein again.

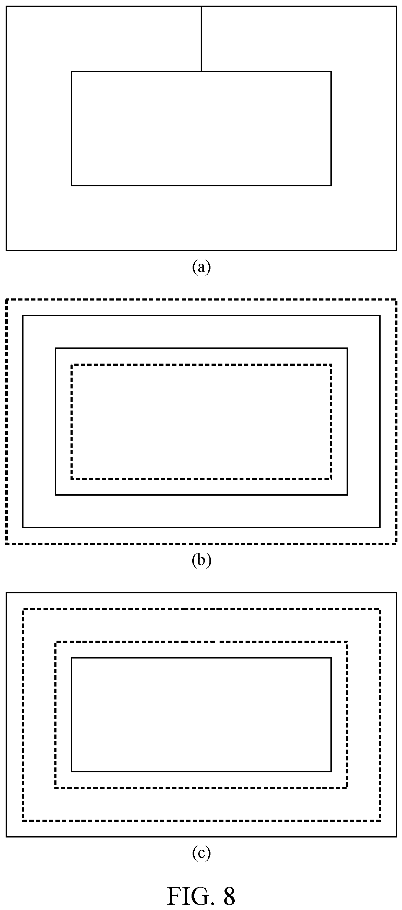

By using the solutions shown in the embodiment of this application, when performing compensation correction on a wire pattern with a genus (for example, a pattern with a genus of 1 and at least one common point on a common edge), problems such as breakage and overlap of the pattern do not occur. In this way, it is ensured that an etched pattern does not damage an original device structure. For example, FIG. 8 is a diagram of a processing effect of a dual-concentric square-shaped wire pattern according to this embodiment of this application. Section (a) in FIG. 8 shows a pattern of a dual-concentric square-shaped wire in input initial circuit layout. Section (b) in FIG. 8 shows a pattern after the layout is narrowed. Section (c) in FIG. 8 shows a pattern after the layout is enlarged. Dashed line boxes in FIG. 8 are boundaries of a corrected pattern.

Step 404: Correct the boundary of the wire in the initial circuit layout based on the correction frame to obtain corrected circuit layout.

In the embodiment of this application, after obtaining the correction frame, the computer device may expand or narrow the boundary of the wire in the initial circuit layout based on the correction frame to obtain the corrected circuit layout.

In a possible implementation, the correcting the boundary of the wire in the initial circuit layout based on the correction frame to obtain corrected circuit layout includes:
performing a Boolean operation on the initial position information of the wire in the chip and position information of the correction frame to obtain the corrected circuit layout.

The computer device may correct the boundary of the wire in the initial circuit layout based on the correction frame by using a manner of a Boolean operation.

In a possible implementation, the performing a Boolean operation on the initial position information of the wire in the chip and position information of the correction frame to obtain the corrected circuit layout includes:
performing a merge operation on the initial position information of the wire in the chip and the position information of the correction frame in a case that the correction frame is located outside the boundary of the wire in the initial circuit layout.

In a case that the correction frame is located outside the boundary of the wire in the initial circuit layout (for example, the computer device may determine whether the correction frame is located outside the boundary of the wire in the initial circuit layout based on a size relationship of coordinate values), it means that the correction frame is obtained by extending the boundary of the wire in the initial circuit layout. At this time, a merge operation may be performed on the initial position information of the wire and the position information of the correction frame. That is, a pattern of the correction frame is added to an initial pattern of the wire to obtain a corrected wire pattern.

In a possible implementation, the performing a Boolean operation on the initial position information of the wire in the chip and position information of the correction frame to obtain the corrected circuit layout includes:
performing a subtract operation on the initial position information of the wire in the chip and the position information of the correction frame in a case that the correction frame is located inside the boundary of the wire in the initial circuit layout.

In a case that the correction frame is located inside the boundary of the wire in the initial circuit layout, it means that the correction frame is obtained by shrinking the boundary of the wire in the initial circuit layout. At this time, a subtraction operation may be performed on the initial position information of the wire and the position information of the correction frame. That is, a pattern of the correction frame is subtracted from the initial pattern of the wire to obtain a corrected wire pattern.

In a possible implementation, the performing a Boolean operation on the initial position information of the wire in the chip and position information of the correction frame to obtain the corrected circuit layout includes:
performing a merge operation on the initial position information of the wire in the chip and the position information of the correction frame in a case that the frame correction value is a positive value.

In a possible implementation, the performing a Boolean operation on the initial position information of the wire in the chip and position information of the correction frame to obtain the corrected circuit layout includes:
performing a subtract operation on the initial position information of the wire in the chip and the position information of the correction frame in a case that the frame correction value is a negative value.

In another example solution of the embodiment of this application, the computer device may also determine whether to use the merge operation or the subtraction operation in other ways. For example, in a case that the value of offset is positive, the merge operation is performed on the initial position information of the wire in the chip and the position information of the correction frame. Otherwise, in a case that the value of offset is negative, the subtract operation is performed on the initial position information of the wire in the chip and the position information of the correction frame.

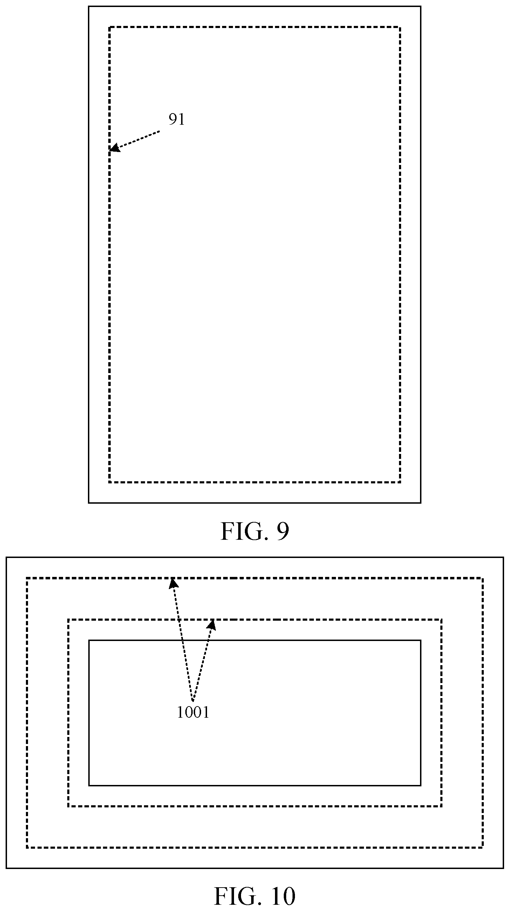

Effects of the Boolean operation may be as follows:
(1) For a complete pattern without a genus
   FIG. 9 shows a processing effect of a pattern without a genus according to this embodiment of this application. After the correction frame is generated, a Boolean operation needs to be performed on a frame and an original pattern. To shrink the size of the wire pattern in the layout, it is necessary to perform a subtract operation on the frame in section (b) in FIG. 6 and the original pattern in section (a) in FIG. 6 to obtain a shrunk pattern. As shown in FIG. 9, the shrunk pattern is represented by a dashed line box 91. On the contrary, if the layout needs to be widened, a merge operation needs to be performed on the frame and the layout.
(2) For a "dual-concentric square-shaped" pattern with a genus of 1

FIG. 10 shows a processing effect of a pattern with a genus according to an embodiment of this application. After the correction frame is generated for the inner and outer boundaries of the "dual-concentric square-shaped" pattern, a Boolean operation may be performed on an original pattern and a correction frame as needed. FIG. 10 shows the effect of shrinking the "dual-concentric square-shaped" pattern after subtraction. The boundary of a shrunk pattern is represented by a dashed line 1001. It can be seen that no crack is generated after the pattern shrinks.

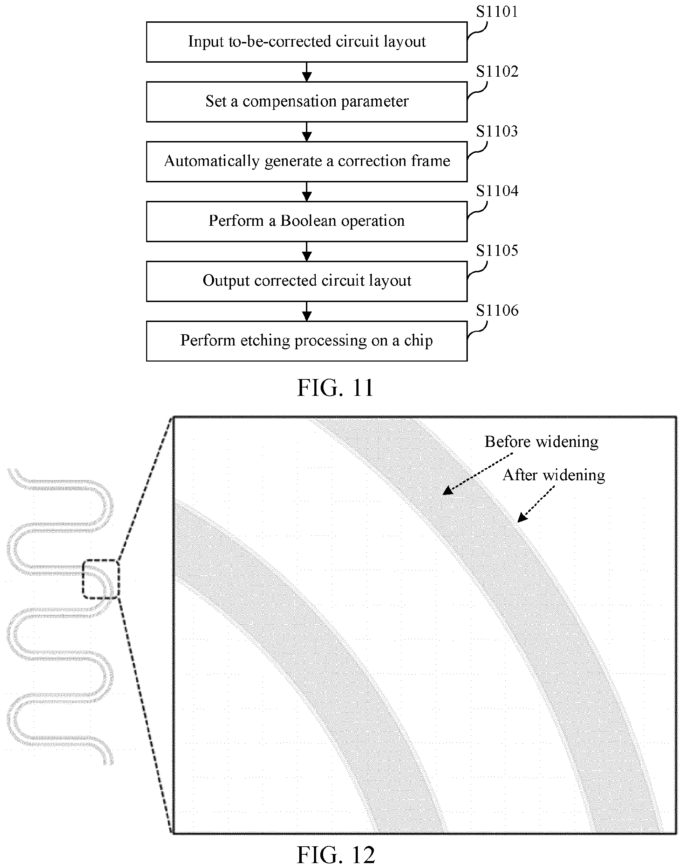

FIG. 11 is a flowchart of a solution according to an embodiment of this application. As shown in FIG. 11, the solution flowchart is as follows:
S1101: A user (a designer) inputs to-be-corrected circuit layout.
S1102: The user sets a compensation parameter (a frame correction value).
S1103: A compensation algorithm automatically generates a correction frame based on the compensation parameter.
S1104: A Boolean operation is performed on the correction frame and an original pattern, a merge or subtract operation is performed on the correction frame and the original pattern, so that layout is widen or narrowed.
S1105: A corrected circuit layout is outputted.
S1106: A production line personnel perform etching on a chip based on the corrected circuit layout.

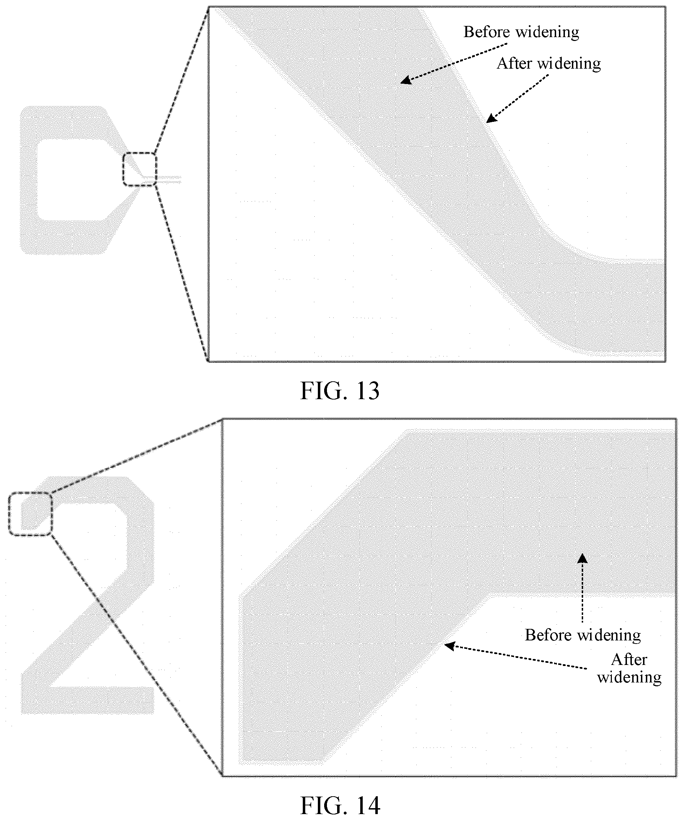

Refer FIG. 12 to FIG. 14, FIG. 12 shows an engineering implementation effect of widening a CPW resonance cavity on circuit layout. FIG. 13 shows an engineering implementation effect of widening a pad on circuit layout. FIG. 14 shows an engineering implementation effect of widening silkscreen on circuit layout.

The solution shown in the embodiment of this application compensates for wire size errors caused by etching during the manufacturing process of a superconducting quantum chip. In this solution, an impact of the etching error on device parameters and performance is greatly reduced. In addition, chip design efficiency is improved. The solution may be widely applied to on-chip wire size adjustment.

In conclusion, by using the solutions in the embodiment of this application, for initial circuit layout of a designed chip, a wire of initial circuit layout can be corrected based on the frame correction value set by the etching error, so that the circuit layout can be automatically adjusted according to an error of an etching process during a chip design stage, thereby reducing an impact of an etching process error during the etching process of chip manufacturing, while ensuring design efficiency of the circuit layout of the chip.

In the solution shown in the embodiment of this application, a size of a pattern such as CPW, components, and silkscreen on the layout may be expanded or shrunk automatically based on an inputted target compensation parameter (that is, the frame correction value, where selection of the parameter is based on an experimental data feedback under a current process condition)without introducing additional problems such as pattern breakage or overlap on the layout. In this way, the workload of design and manufacturing personnel is greatly simplified, an impact of the etching error is avoided while improving chip design efficiency.

The solutions shown in the embodiments of this application have the following innovations:
(1) Correcting etching errors during the processing of superconducting quantum chips;
(2) Global adjustment: Performing compensation correction on the size of all CPW lines, components, and silkscreen on the entire layout;
(3) Adjustable compensation parameters (which may be set or modified by a designer); and
(4) Allowing one-click adjustment of the layout size based on parameters.

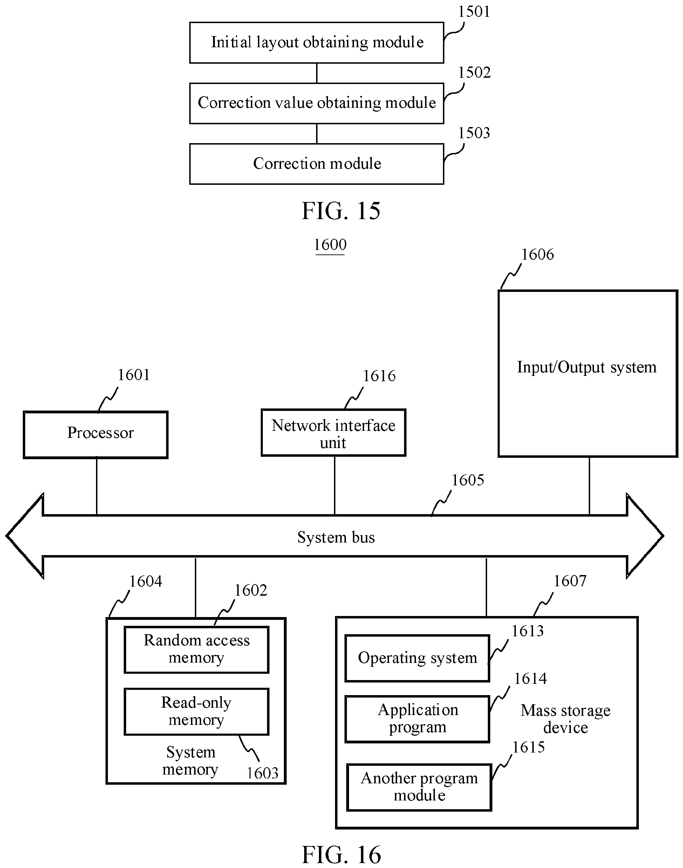

FIG. 15 is a block diagram of a structure of a circuit layout processing apparatus according to an exemplary embodiment of this application. The circuit layout processing apparatus may implement all or part of the steps performed by a computer device in the method provided by the embodiments shown in FIG. 2 or FIG. 4. The circuit layout processing apparatus includes:
an initial layout obtaining module 1501, configured to obtain initial circuit layout of a chip, the initial circuit layout including initial position information of a wire in the chip;
a correction value obtaining module 1502, configured to obtain a frame correction value for the wire, the frame correction value being a correction value that is set based on an etching error during a process of processing the chip; and
a correction module 1503, configured to correct a boundary of the wire in the initial circuit layout based on the initial position information and the frame correction value to obtain corrected circuit layout.

The corrected circuit layout is configured to prepare the wire in the chip by using an etching process.

In a possible implementation, the correction module 1503 is configured to:
generate a correction frame of the boundary of the wire in the initial circuit layout based on the initial position information and the frame correction value; and
correct the boundary of the wire in the initial circuit layout based on the correction frame to obtain the corrected circuit layout.

In a possible implementation, the correction module 1503 is configured to perform a Boolean operation on the initial position information and position information of the correction frame to obtain the corrected circuit layout.

In a possible implementation, the correction module 1503 is configured to perform a merge operation on the initial position information and the position information of the correction frame in a case that the frame correction value is a positive value.

In a possible implementation, the correction module 1503 is configured to perform a subtract operation on the initial position information and the position information of the correction frame in a case that the frame correction value is a negative value.

In a possible implementation, the correction value obtaining module 1502 is configured to:
obtain genus detection information of the wire, the genus detection information being used for indicating whether a genus exists in the wire; and
generate the correction frame based on the initial position information and the frame correction value according to the genus detection information.

In a possible implementation, the correction value obtaining module 1502 is configured to add, in response to the genus detection information indicating that no genus exists in the wire, the frame correction value based on the initial position information of the boundary of the wire to obtain the correction frame.

In a possible implementation, the correction value obtaining module 1502 is configured to:
segment, in response to the genus detection information indicating that the wire has a genus, the boundary of the wire to obtain at least one outer boundary frame and at least one inner boundary frame, where the outer boundary frame is a frame enclosed by an outer boundary of the wire, and the inner boundary frame is a frame enclosed by a boundary of the genus in the wire;
add, based on initial position information of the at least one outer boundary frame, the frame correction value based on the at least one outer boundary frame to obtain at least one outer boundary correction frame;
subtract, based on initial position information of the at least one inner boundary frame, the frame correction value from the at least one inner boundary frame to obtain at least one inner boundary correction frame; and
obtain the at least one outer boundary correction frame and the at least one inner boundary correction frame as the correction frame.

In a possible implementation, the correction value obtaining module 1502 is configured to:
obtain first genus detection information in response to position information of repeated points existing in the initial position information of the wire, the first genus detection information being used for indicating that a genus exists in a region covered by the wire; and
obtain second genus detection information in response to no position information of repeated points existing in the initial position information of the wire, the second genus detection information being used for indicating that no genus exists in the region covered by the wire.

In a possible implementation, the chip is a superconducting quantum chip.

In a possible implementation, the wire includes at least one of a coplanar waveguide line, a component, and silkscreen.

In conclusion, by using the solutions in the embodiment of this application, for initial circuit layout of a designed chip, a wire of initial circuit layout can be corrected based on the frame correction value set by the etching error, so that the circuit layout can be automatically adjusted according to an error of an etching process during a chip design stage, thereby reducing an impact of an etching process error during the etching process of chip manufacturing, while ensuring design efficiency of the circuit layout of the chip.

When the apparatus provided in the foregoing embodiment implements functions of the apparatus, division of the foregoing functional modules is merely used as an example for description. In practical application, the foregoing functions may be allocated to different functional modules for implementation based on a requirement. To be specific, an internal structure of a device is divided into different functional modules, to implement all or some of the functions described above. In addition, the apparatus provided in the above-mentioned embodiments and the method embodiments are based on the same conception. For details of the specific implementation process, refer to the method embodiments. Details are not described herein again.

FIG. 16 is a schematic diagram of a structure of a computer device according to an exemplary embodiment. The computer device 1600 includes a processor 1601, such as a central processing unit (CPU), a system memory 1604 including a random access memory (RAM) 1602 and a read-only memory (ROM) 1603, and a system bus 1605 connecting the system memory 1604 to the processor 1601. The computer device 1600 further includes an input/output system 1606 assisting in information transmission between components in the computer, and a mass storage device 1607 configured to store an operating system 1613, an application program 1614, and another program module 1615.

The mass storage device 1607 is connected to the processor 1601 by using a mass storage controller (not shown) connected to the system bus 1605. The mass storage device 1607 and a computer-readable medium associated with the mass storage device provide non-volatile storage to the computer device 1600. To be specific, the mass storage device 1607 may include a computer-readable medium (not shown) such as a hard disk or a compact disc read-only memory (CD-ROM) drive.

In general, the computer-readable medium may include a computer storage medium and a communication medium. The computer storage medium includes volatile and non-volatile media, and removable and non-removable media implemented by using any method or technology used for storing information such as computer-readable instructions, data structures, program modules, or other data. The computer storage medium includes RAM, ROM, flash memory or other solid-state storage technologies, CD-ROM, or other optical storage, magnetic tape cassettes, magnetic tapes, magnetic disk storage or other magnetic storage devices. Certainly, a person skilled in the art may learn that the computer storage medium is not limited to the foregoing several types. The system memory 1604 and the mass storage device 1607 may be collectively referred to as a memory.

The computer device 1600 may be connected to the Internet or other network devices through a network interface unit 1616 connected to the system bus 1605.

The memory further includes one or more computer instructions. The one or more computer instructions are stored in the memory. The processor 1601 implements all or partial steps of the method shown in FIG. 2 or FIG. 4 by executing the one or more computer instructions.

In an exemplary embodiment, a non-transitory computer-readable storage medium including an instruction is further provided, for example, a memory including a computer program (an instruction), and the foregoing program (the instruction) may be executed by a processor of the computer device to complete the methods shown in various embodiments of this application. For example, the non-transitory computer-readable storage medium may be a ROM, a RAM, a CD-ROM, a magnetic tape, a floppy disk, and an optical data storage device.

In an exemplary embodiment, a computer program product or computer program is further provided. The computer program product or the computer program includes computer instructions. The computer instructions are stored in a computer-readable storage medium. The processor of the computer device reads the computer instructions from the computer-readable storage medium, and the processor executes the computer instructions, so that the computer device performs the method shown in the above-mentioned various embodiments.

## Claims

1. A circuit layout processing method, executable by a computer device, the method comprising:
obtaining initial circuit layout of a chip, the initial circuit layout comprising initial position information of a wire in the chip;
obtaining a frame correction value for the wire, the frame correction value being determined based on an etching error during a process of processing the chip; and
correcting a boundary of the wire in the initial circuit layout based on the initial position information and the frame correction value to obtain corrected circuit layout.

2. The method according to claim 1, the correcting a boundary of the wire in the initial circuit layout based on the initial position information and the frame correction value to obtain corrected circuit layout comprising:
generating a correction frame of the boundary of the wire in the initial circuit layout based on the initial position information and the frame correction value; and
correcting the boundary of the wire in the initial circuit layout based on the correction frame to obtain the corrected circuit layout.

3. The method according to claim 2, the correcting the boundary of the wire in the initial circuit layout based on the correction frame to obtain the corrected circuit layout comprising:
performing a Boolean operation on the initial position information and position information of the correction frame to obtain the corrected circuit layout.

4. The method according to claim 3, the performing a Boolean operation on the initial position information of the wire in the chip and position information of the correction frame to obtain the corrected circuit layout comprising:
performing a merge operation on the initial position information and the position information of the correction frame in response to that the frame correction value is a positive value.

5. The method according to claim 3 or 4, the performing a Boolean operation on the initial position information of the wire in the chip and position information of the correction frame to obtain the corrected circuit layout comprising:
performing a subtract operation on the initial position information and the position information of the correction frame in response to that the frame correction value is a negative value.

6. The method according to claim 2, the generating a correction frame of the boundary of the wire in the initial circuit layout based on the initial position information and the frame correction value comprising:
obtaining genus detection information of the wire, the genus detection information indicating whether a genus exists in the wire; and
generating the correction frame based on the initial position information and the frame correction value according to the genus detection information.

7. The method according to claim 6, the generating the correction frame based on the initial position information and the frame correction value according to the genus detection information comprising:
adding, in response to the genus detection information indicating that no genus exists in the wire, the frame correction value based on the initial position information of the boundary of the wire to obtain the correction frame.

8. The method according to claim 6 or 7, the generating the correction frame based on the initial position information and the frame correction value according to the genus detection information comprising:
segmenting, in response to the genus detection information indicating that the wire has a genus, the boundary of the wire to obtain at least one outer boundary frame and at least one inner boundary frame, wherein the outer boundary frame is a frame enclosed by an outer boundary of the wire, and the inner boundary frame is a frame enclosed by a boundary of the genus in the wire;
adding the frame correction value to the position information of at least one outer boundary frame to obtain at least one outer boundary correction frame;
subtracting the frame correction value from position information of the at least one inner boundary frame to obtain at least one inner boundary correction frame; and
obtaining the at least one outer boundary correction frame and the at least one inner boundary correction frame as the correction frame.

9. The method according to any one of claims 6 to 8, the obtaining genus detection information of the wire comprising:
obtaining first genus detection information in response to position information of repeated points existing in the initial position information of the wire, the first genus detection information indicating that a genus exists in the wire; and
obtaining second genus detection information in response to no position information of repeated points existing in the initial position information of the wire, the second genus detection information indicating that no genus exists in the wire.

10. The method according to any one of claims 1 to 9, wherein the chip is a superconducting quantum chip.

11. The method according to any one of claims 1 to 10, wherein the wire comprises at least one of a coplanar waveguide line, a component, and silkscreen.

12. A circuit layout processing apparatus, comprising:
an initial layout obtaining module, configured to obtain initial circuit layout of a chip, the initial circuit layout comprising initial position information of a wire in the chip;
a correction value obtaining module, configured to obtain a frame correction value for the wire, the frame correction value being determined based on an etching error during a process of processing the chip; and
a correction module, configured to correct a boundary of the wire in the initial circuit layout based on the initial position information and the frame correction value to obtain corrected circuit layout.

13. The apparatus according to claim 12, wherein the correction module is configured to:
generate a correction frame of the boundary of the wire in the initial circuit layout based on the initial position information and the frame correction value; and
correct the boundary of the wire in the initial circuit layout based on the correction frame to obtain the corrected circuit layout.

14. The apparatus according to claim 13, wherein the correction module is configured to perform a Boolean operation on the initial position information and position information of the correction frame to obtain the corrected circuit layout.

15. The apparatus according to claim 14, wherein the correction module is configured to perform a merge operation on the initial position information and the position information of the correction frame in response to that the frame correction value is a positive value.

16. The apparatus according to claim 14 or 15, wherein the correction module is configured to perform a subtract operation on the initial position information and the position information of the correction frame in response to that the frame correction value is a negative value.

17. The apparatus according to claim 13, wherein the correction value obtaining module is configured to:
obtain genus detection information of the wire, the genus detection information indicating whether a genus exists in the wire; and
generate the correction frame based on the initial position information and the frame correction value according to the genus detection information.

18. A computer device, comprising a processor and a memory, the memory having at least one computer instruction stored therein, and the at least one computer instruction being loaded and executed by the processor to implement the circuit layout processing method according to any one of claims 1 to 11.

19. A computer-readable storage medium, the storage medium having at least one computer instruction stored thereon, and the at least one computer instruction being loaded and executed by a processor to implement the circuit layout processing method according to any one of claims 1 to 11.

20. A computer program product, comprising computer instructions, a computer-readable storage medium having the computer instructions stored thereon; and the computer instructions being executed by a processor of a computer device to implement the circuit layout processing method according to any one of claims 1 to 11.
